(19)

Europäisches
Patentamt

European
Patent Office

Office européen
des brevets

(11) **EP 4 764 586 A1**

(12) **EUROPEAN PATENT APPLICATION**

(43) Date of publication:
24.06.2026 Bulletin 2026/26

(21) Application number: 24220484.0

(22) Date of filing: **17.12.2024**

(51) International Patent Classification (IPC):
**G01S 5/02** (2010.01)   **G01S 11/02** (2010.01)
**G01C 15/00** (2006.01)

(52) Cooperative Patent Classification (CPC):
**G01S 5/02216; G01C 15/002; G01C 21/165;
G01S 5/0294; G01S 11/02**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Trimble Inc
Westminster CO 80021 (US)**

(72) Inventors:
• **Trigo, Guilherme F.**
**München (DE)**
• **Görcke, Lorenz**
**München (DE)**

(74) Representative: **Hoffmann Eitle
Patent- und Rechtsanwälte PartmbB
Arabellastraße 30
81925 München (DE)**

(54) **ESTIMATION OF OFFSET BETWEEN CLOCKS IN A DISTRIBUTED SYSTEM**

(57)     Some embodiments of the invention pertain to methods for estimating an offset between clocks (110, 210) of separate devices (100, 200), for example for clock synchronization purposes. The devices (100, 200) are moving, at least for a period of time, with respect to each other. An estimator (130, 230, 330) is operated, which computes values of its state variables based on time-tagged measurement data from the respective devices (100, 200), wherein the time-tagged measurement data represents a motion of a first device (100) measured, on the one hand, by the first device (100) and, on the other hand, by a second device (200). The method does not necessarily depend on good GNSS coverage. Systems and devices for carrying the method, or a part thereof, are also disclosed.

s10 — measuring, using the motion sensor of device A, a motion of device A, wherein data indicative of the motion of device A measured using the motion sensor of device A is referred to as "measurement data A", and measurement data A is time-tagged using clock A

s20 — measuring, by device B, a motion of at least one point of device A with respect to device B, wherein data indicative of the motion of the at least one point of device A with respect to device B as measured by device B is referred to as "measurement data B", and measurement data B is time-tagged using clock B

s30 — operating an estimator using state variables comprising: (i) at least one state variable representing an estimated offset between clock A and clock B or from which the estimated offset can be derived, and (ii) at least one position-related state variable; and the estimator computing values of its state variables based on: the time-tagged measurement data A, and the time-tagged measurement data B

s40a — outputting, by the estimator, the estimated offset between clocks A and B

Fig. 1a

EP 4 764 586 A1

**Description**

**[Field of technology]**

The invention relates to methods, systems, devices, and computer programs for estimating an offset between clocks in a distributed system, a task that may for example be relevant for synchronizing the clocks. The fields of application of the methods, systems, devices, and computer programs are diverse and include, but are not limited to, navigation, highly automated driving, autonomous driving, robotics, civil engineering, construction, agriculture, wireless communications, and scientific research.

**[Background]**

Navigation satellite systems (NSS) include both global navigation satellite systems (GNSS) and regional navigation satellite systems (RNSS), such as the Global Positioning System (GPS) (United States), GLONASS (Russia), Galileo (Europe), BDS (China), QZSS (Japan), and the Indian Regional Navigational Satellite System (IRNSS, also referred to as NAVIC) (systems in use or in development), and is also intended to be inclusive of both MEO-PNT and LEO-PNT navigation satellite systems. An NSS typically uses a plurality of satellites orbiting the Earth. The plurality of satellites forms a constellation of satellites. An NSS receiver detects a code modulated on an electromagnetic signal broadcast by a satellite. The code is also called a ranging code. Code detection includes comparing the bit sequence modulated on the broadcasted signal with a receiver-side version of the code to be detected. Based on the detection of the time of arrival of the code for each of a series of the satellites, the NSS receiver estimates its position. Positioning includes, but is not limited to, geolocation, i.e., the positioning on the surface of the Earth.

An overview of GPS, GLONASS, and Galileo is provided for example in sections 9, 10, and 11 of ref. [1] (a list of references is provided at the end of the present description, after a list of abbreviations and acronyms).

Besides positioning, another use of GNSS is the determination of accurate time, including the synchronization of clocks (see, e.g., ref. [1], section 13.1.5 titled "Time transfer"). In GNSS-allowed applications, a GNSS receiver module placed on each of a plurality of devices of a distributed system can provide a common time base and thus synchronize the devices' time grids. However, as this solution relies on GNSS coverage, it does not always work reliably in GNSS-challenging environments (urban canyons, forests, etc.) and cannot be used at all in GNSS-denied scenarios (indoor, underground, etc.).

Inter-device wireless connectivity (e.g., radio) can also provide means for the time synchronization of several hardware nodes in a distributed system. However, depending on the communication technology used (which is typically selected according to bandwidth and range needs), the achievable time synchronization accuracy may be insufficient for some applications.

In view of the above, there is a constant need for improving systems used for example for providing fine synchronization of clocks in distributed systems.

**[Summary]**

The present invention aims at addressing the above-mentioned need. The invention includes methods, devices, computer programs, computer program products, and storage mediums as defined in the independent claims. Particular embodiments are defined in the dependent claims.

In one embodiment, a method is carried out by a system comprising a first device, here referred to as "device A", and a second device, here referred to as "device B", wherein (i) devices A and B are moving, at least for a period of time, with respect to each other; (ii) a first clock, here referred to as "clock A", runs on device A; (iii) a second clock, here referred to as "clock B", runs on device B; and (iv) device A comprises a motion sensor. The method comprises the following. A motion of device A is measured using the motion sensor of device A, wherein data indicative of the motion of device A measured using device A's motion sensor is here referred to as "measurement data A", and measurement data A is time-tagged using clock A. Device B measures a motion of at least one point of device A with respect to device B, wherein data indicative of the motion of the at least one point of device A with respect to device B as measured by device B is here referred to as "measurement data B", and measurement data B is time-tagged using clock B. An estimation process, here referred to as "estimator", is operated, wherein (a) the estimator uses state variables comprising: (i) at least one state variable representing an estimated offset between clocks A and B or from which the estimated offset can be derived, and (ii) at least one position-related state variable; and (b) the estimator computes values of its state variables based on: (i) time-tagged measurement data A, and (ii) time-tagged measurement data B. The estimator outputs at least one of: (a) the estimated offset between clocks A and B; and (b) at least one estimated motion state of device A.

The method generally provides the ability for estimating the offset between the clocks of devices A and B (for example for clock synchronization purposes) without necessarily being dependent on good GNSS coverage, on the one hand, and generally offering high accuracy, on the other hand.

In one embodiment, a method is carried out by a device, or by a set of devices, on which the above-referred estimator is operated. Namely, the device, or the set of devices, obtains time-tagged measurement data A and B and uses the data in the estimator for estimating an offset between clocks A and B.

In one embodiment, a system, a device, or a set of devices, is configured to carry out any of the above-described methods.

In some embodiments, computer programs, computer program products and storage media for storing such computer programs are provided. Such computer programs comprise computer-executable instructions configured for carrying out, when executed on a computer such as one embedded in, or otherwise part of, a device (such as device A, device B, or another device), or when executed on a set of computers such as a set of computers embedded in, or otherwise part of, a set of devices, any of the above-described methods.

**[Brief description of the drawings]**

Embodiments of the present invention shall now be described in conjunction with the appended drawings in which:

Figs. 1a to 1c are flowcharts of methods in three embodiments of the invention;
Fig. 2 schematically illustrates a system comprising devices A and B, in one embodiment of the invention;
Figs. 3a and 3b schematically illustrate systems comprising devices A and B, in two embodiments of the invention, together with arrows depicting some information flow within the systems;
Figs. 3c to 3e schematically illustrate systems comprising devices A, B, and C, in three embodiments of the invention, together with arrows depicting some information flow within the systems;
Figs. 4a to 4d schematically illustrate devices A in four embodiments of the invention;
Figs. 5a and 5b schematically illustrate devices B in two embodiments of the invention;
Fig. 6 schematically illustrates a system comprising a device A and a device B, in one embodiment of the invention;
Fig. 7 is a flowchart of part of a method in one embodiment of the invention, including a preliminary time synchronization;
Fig. 8 schematically illustrates a navigation system setup diagram including a device A and a device B, in one embodiment of the invention;
Fig. 9 schematically illustrates a navigation computer in one embodiment of the invention, including the transmission of a clock offset estimate feedback to a position measurement processor;
Fig. 10 schematically illustrates a close-loop aided INS architecture which some embodiments of the invention may use; and

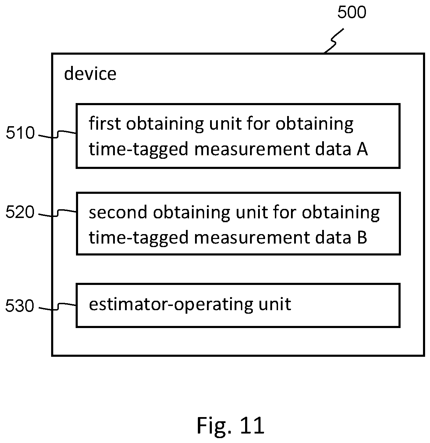

Fig. 11 schematically illustrates a device in one embodiment of the invention.

**[Detailed description]**

The present invention shall now be described in conjunction with specific embodiments. These serve to provide the skilled person with a better understanding but are not intended to in any way restrict the scope of the invention, which is defined by the appended claims. In particular, the embodiments described throughout the description can be combined to form further embodiments to the extent that they are not mutually exclusive.

Throughout the following description, the abbreviation "GNSS" is sometimes used. The disclosure is, however, not limited to global navigation satellite systems (GNSS) but also applies to regional navigation satellite systems (RNSS). Thus, it is to be understood that each occurrence of "GNSS" in the following can be replaced with "RNSS". In addition, as mentioned above in the "Background" section, the term "NSS" is here intended to cover many types of systems, and those may also include systems involving MEO-PNT and/or LEO-PNT navigation satellite systems.

When the term "real-time" is used in the present disclosure, it means that an action is performed (e.g., data is received, processed, or transmitted, results are computed) as soon as the required information for that action is available. Thus, certain latency exists, which depends on various aspects depending on the involved component(s) of the system.

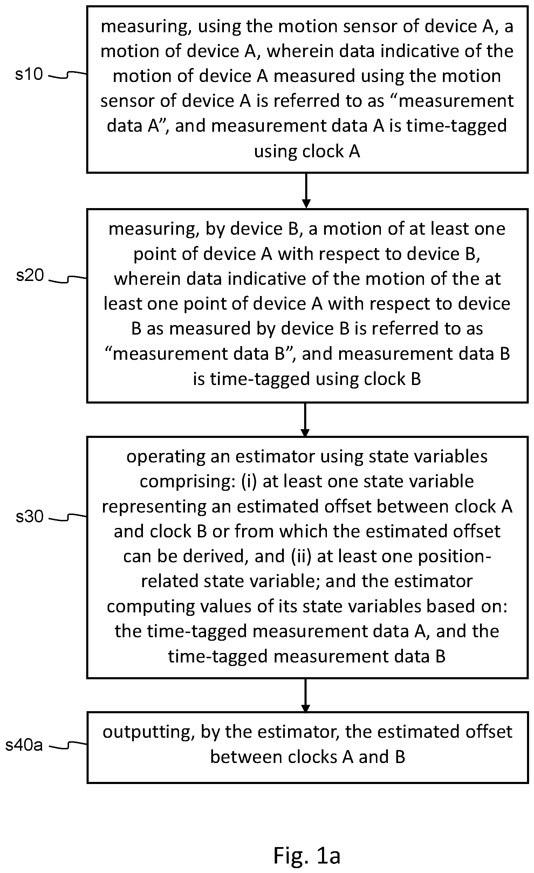

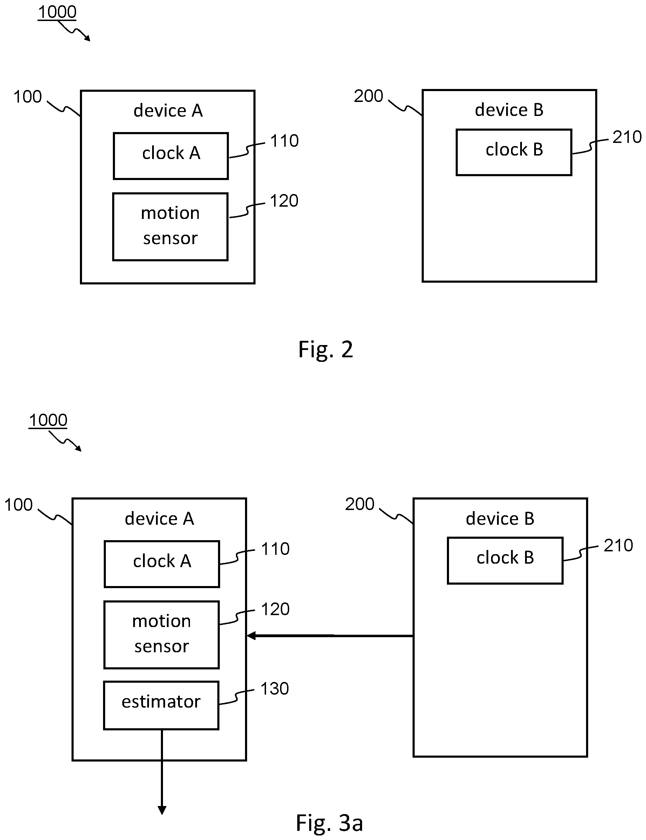

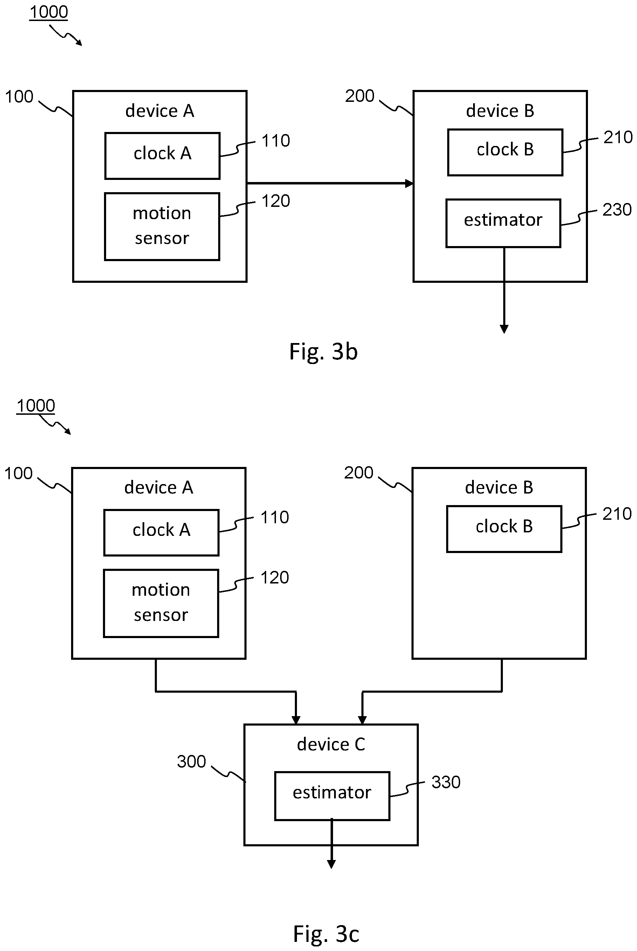

Fig. 1a is a flowchart of a method in one embodiment of the invention, which will be described also with further reference to other drawings including Figs. 2 and 3a to 3e. In other words, the flowchart of Fig. 1a may be read in conjunction with each of the diagrams of Figs. 2 and 3a to 3e. Specifically, Fig. 2 schematically illustrates a system 1000 comprising two devices, in one embodiment of the invention; Figs. 3a and 3b schematically illustrate systems 1000 each comprising two devices, in two embodiments of the invention, together with some arrows depicting some information flow in these systems 1000; and Figs. 3c to 3e schematically illustrate systems 1000 each comprising three devices, in three embodiments of the invention, together with some arrows depicting some information flow in these systems 1000.

The method of Fig. 1a is carried out by a system 1000 that comprises at least a first device 100 and a second device 200, as illustrated in Figs. 2 and 3a to 3e. First device 100 is here referred to as "device A" 100, and second device 200 is here referred to as "device B" 200.

First device 100 and second device 200 are physically separated from each other in the sense that they can at least be moved with respect to each other. Specifically, device A 100 and device B 200 are moving with respect to each other, at least for a period of time during which the method is performed.

Furthermore, a first clock 110, here referred to as "clock A" 110, runs on device A 100, and a second clock 210, here referred to as "clock B" 210, runs on device B 200. Clock A 110 and clock B 210 run continuously, i.e. continuously when the method is being carried out. A clock is here understood a device used to measure, i.e. keep track of, time and is understood to also encompass timers, chronometers, processor's clocks (providing a clock signal), and other timekeeping equipment.

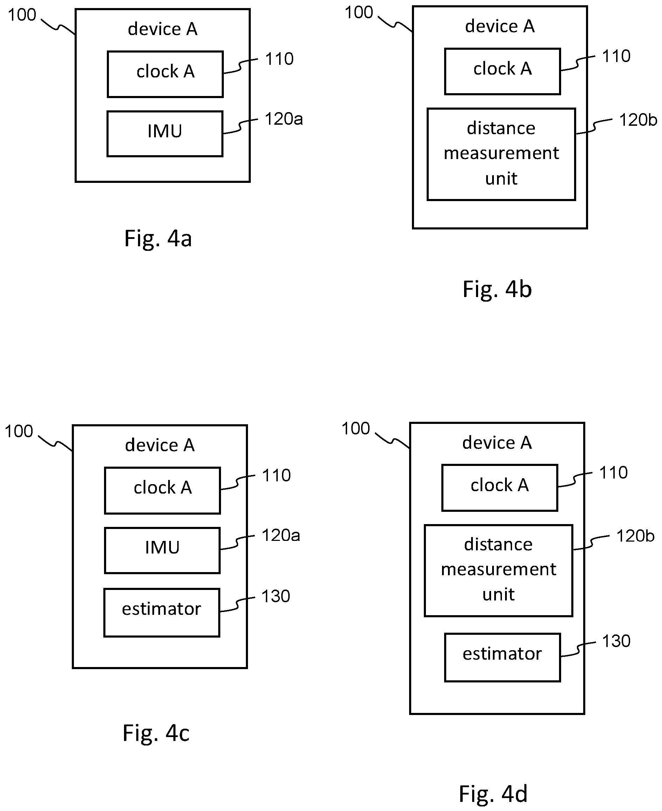

Yet furthermore, device A 100 comprises a motion sensor 120, as schematically illustrated for example in Fig. 2. In one embodiment, motion sensor 120 is or comprises a dead-reckoning navigation sensor. In one embodiment, motion sensor 120 is or comprises an inertial measurement unit (IMU) 120a (as schematically illustrated in Fig. 4a). In another embodiment, motion sensor 120 is or comprises a distance measurement unit 120b, e.g. an odometer (as schematically illustrated in Fig. 4b). In yet another embodiment, motion sensor 120 is or comprises a combination of both an IMU 120a and a distance measurement unit 120b. Distance measurement unit 120b may be a distance measuring instrument (DMI). In one embodiment, IMU 120a is a 3-axis IMU. In other embodiments, an IMU 120a with fewer axes (i.e., a 2- or 1-axis IMU) is used in combination with distance measurement unit(s) and/or motion constraint(s).

In operation s10, a motion of device A 100 is measured using motion sensor 120 of device A 100, wherein data indicative of the motion of device A 100 measured using motion sensor 120 is here referred to as "measurement data A", and measurement data A is time-tagged, such as time-stamped, using clock A 110.

In operation s20, which is performed in parallel to operation s10, device B 200 measures a motion of at least one point (a "target point") of device A 100 with respect to device B 200, wherein data indicative of the motion of the at least one point of device A 100 with respect to device B 200 as measured by device B 200 is here referred to as "measurement data B", and measurement data B is time-tagged, such as time-stamped, using clock B 210.

By "performed in parallel to operation s10", it is meant that the measurement of operation s10 and the measurement of operation s20 cover a common operation time span. However, the measurement epochs themselves need not necessarily coincide. Likewise, the measurement rate of operation s10 and the measurement rate of operation s20 need not necessarily match.

By measuring "motion" in operations s10 and s20, it is here meant measuring, at least during a period of time during which device A 100 and device B 200 are moving with respect to each other, a change of position, a change of velocity, or a change of acceleration. The motion measurements of operations s10 and s20 should be sufficiently accurate to provide observability, i.e. the sensor noise level should be lower (or accuracy level should be higher) than the levels of motion being measured to provide observability.

In operation s30, an estimation process, here referred to as "estimator" 130, 230, 330, is operated. Estimator 130, 230, 330 uses state variables comprising: (i) at least one state variable representing an estimated time offset between clock A 110 and clock B 210 or from which the estimated offset can be derived (i.e., a proxy quantity of the clock offset can be used), and (ii) at least one position-related state variable. By "position-related state variable", it is here meant a state variable related to position, such as (a) position of device A 100, (b) velocity of device A 100, and/or (c) acceleration of device A 100.

Further, still as part of operation s30, estimator 130, 230, 330 computes values of its state variables based on time-tagged measurement data A and time-tagged measurement data B. Estimator 130, 230, 330 performs operations to effectively combine time-tagged measurement data A and B, so as to align time-tagged measurement data A and B. Estimator 130, 230, 330 does so by estimating together the motion of device A and the offset between clock A 110 and clock B 210. Resolving the offset enables to estimate a position-related state of device A 100.

Estimator 130, 230, 330 can run on device A, device B, or another processing entity, as will be described below.

Estimator 130, 230, 330 is or comprises an algorithm, procedure, or process, or a piece of software, firmware, and/or hardware to implement such an algorithm, procedure, or process, in which a set of state variables (or "state vector") is maintained over time, i.e. the values of the state variables are estimated based on measurements made over time. As mentioned above, the measurements comprise time-tagged measurement data A and B. The estimator involves or comprises, in one embodiment, a Kalman filter, an unscented Kalman filter, a robust estimator, and/or a particle filter. The invention is, however, not limited to the use of a Kalman filter, an unscented Kalman filter, a robust estimator, and/or a particle filter. Other estimation processes, filters, or filter techniques may be used.

The rate at which estimator 130, 230, 330 computes the values of its state variables based on time-tagged measurement data A and B is a design choice and may for example depend on the estimator used. It may for example be anywhere between the rate of the highest-rate sensor and the rate of the lowest-rate sensor or even lower.

In one embodiment, motion sensor 120 is or comprises a dead-reckoning navigation sensor and estimator 130, 230, 330 uses all time-tagged measurement data A from motion sensor 120. The same does not necessarily apply to time-tagged measurement data A, which need not necessarily be all used.

In operation s40, estimator 130, 230, 330 outputs the estimated offset between clock A 110 and clock B 210.

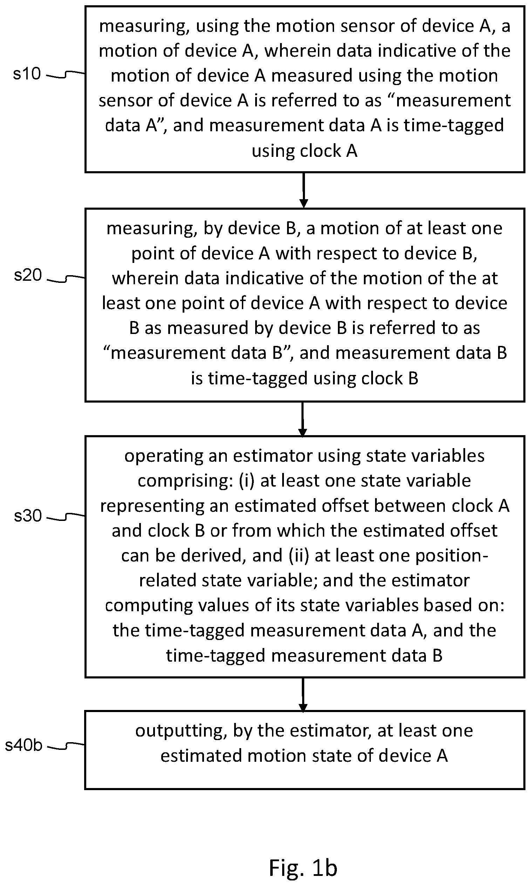

In another embodiment, as illustrated by the flowchart of Fig. 1b, estimator 130, 230, 330 outputs at least one estimated motion state of device A 100. A motion state is here understood as a state representing a motion of device A. The motion state may be for example one of the following: position, velocity, acceleration, attitude angles, and angular rates.

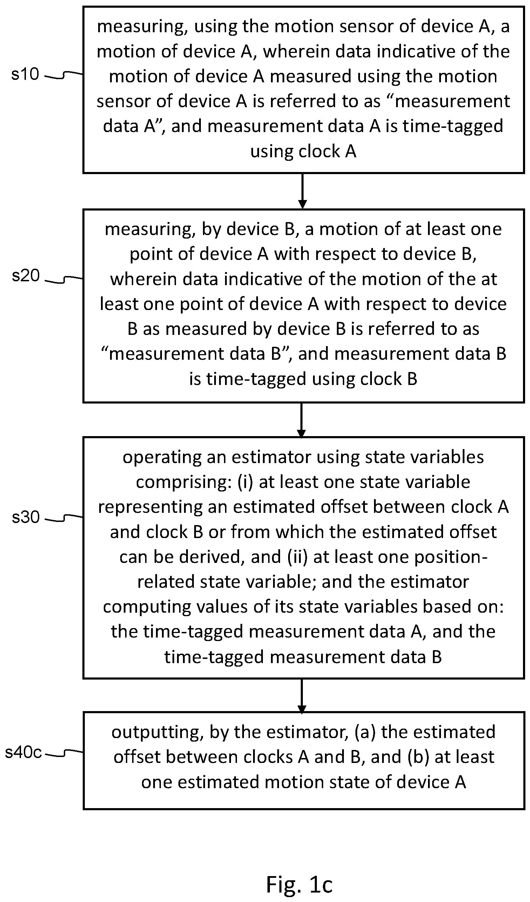

In yet another embodiment, as illustrated by the flowchart of Fig. 1c, estimator 130, 230, 330 outputs both the estimated offset between clock A 110 and clock B 210 and at least one estimated motion state of device A 100.

Outputting the estimated offset and/or the estimated motion state(s) of device A 100 may involve displaying the information on a display. Displaying the estimated offset and/or the estimated motion state(s) of device A 100 may be useful for diverse reasons. For example, displaying the estimated offset may provide a measure of system health. The motion states may be displayed as part of the functionality of the system, e.g. when the user needs this information in real-time (e.g., a surveyor laying down ground markers from a project plan; or an operator driving the vehicle on which device A 100 is physically installed). In one embodiment, the estimated offset may be used for synchronizing clock A 110 and clock B 210.

The above-described methods, as illustrated by the flowcharts of Figs. 1a to 1c, generally provide the ability for time synchronization of clock A 110 of device A 100 and clock B 210 of device B 200 without necessarily being dependent on good GNSS coverage, on the one hand, while generally offering high accuracy, on the other hand. This is generally achievable with no downside in terms of CPU, memory, and power (e.g., battery) requirements. Such a GNSS-free clock synchronization (i.e., for which GNSS timing is not required) by estimating the kinematic (i.e., motion state) and the time offset between two clocks is useful for example in the context of aided-INS (AINS) applications with distributed sensors, also called "distributed AINS applications". See also sections C.1 and C.2 below describing INS and AINS.

In one embodiment, estimator 130, 230, 330 is used in an AINS and may therefore be regarded as an AINS estimator. The method may in effect allow an AINS to receive aiding from a sensor on a separate device with its own clock and without other means of precise synchronization.

Purely for spatial efficiency in the diagram, estimator 130, 230, 330 is not illustrated in Fig. 2. Estimator 130, 230, 330 may be hosted on various devices, i.e. on device A 100, on device B 200, on a third device, here referred as to "device C" 300, or on a combination of these devices. Accordingly, depending on the embodiment, time-tagged measurement data A and/or time-tagged measurement data B may have to be transmitted to the device hosting estimator 130, 230, 330. Some embodiments in this respect are schematically illustrated in Figs. 3a to 3e.

Fig. 3a schematically illustrates an embodiment in which the method further comprises transmitting time-tagged measurement data B from device B 200 to device A 100. The diagram of Fig. 3a also shows that estimator 130 is hosted on device A 100 in this embodiment. That is, operating estimator 130 is carried out on device A 100 in the embodiment of Fig. 3a. In this embodiment, device B 200 comprises a transmitter (not illustrated in Fig. 3a) to transmit time-tagged measurement data B to device A 100, and device A 100 comprises a receiver (not illustrated in Fig. 3a) to receive time-tagged measurement data B from device B 200.

Fig. 3b schematically illustrates an embodiment in which the method further comprises transmitting time-tagged measurement data A from device A 100 to device B 200. The diagram of Fig. 3b also shows that estimator 230 is hosted on device B 200 in this embodiment. That is, operating estimator 230 is carried out on device B 200 in the embodiment of Fig. 3b. In this embodiment, device A 100 comprises a transmitter (not illustrated in Fig. 3b) to transmit time-tagged measurement data A to device B 200, and device B 200 comprises a receiver (not illustrated in Fig. 3b) to receive time-tagged measurement data A from device A 100.

Fig. 3c schematically illustrates an embodiment in which system 1000 further comprises a third device 300, i.e. device C, and the method further comprises: transmitting, from device A 100 to device C 300, time-tagged measurement data A; and transmitting, from device B 200 to device C 300, time-tagged measurement data B. Furthermore, operating estimator 330 is carried out on device C 300. In this embodiment, device A 100 comprises a transmitter (not illustrated in Fig. 3c) to transmit time-tagged measurement data A to device C 300, device B 200 also comprises a transmitter (not illustrated in Fig. 3c) to transmit time-tagged measurement data B to device C 300, and device C 300 comprises a receiver (not illustrated in Fig. 3c) to receive both time-tagged measurement data A from device A 100 and time-tagged measurement data B from device B 200.

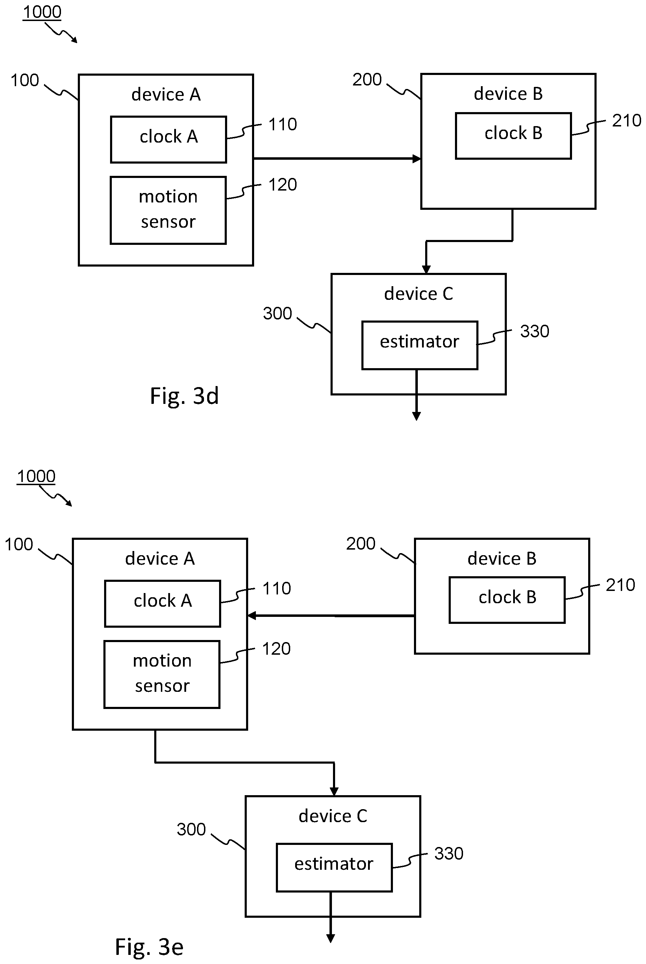

As illustrated in Fig. 3d, time-tagged measurement data A from device A 100 may, in one embodiment, transit through device B 200 prior to being transmitted to device C 300 on which estimator 330 is running. In this embodiment, device A 100 comprises a transmitter (not illustrated in Fig. 3d) to transmit time-tagged measurement data A to device B 200, device B 200 comprises a receiver (not illustrated in Fig. 3d) to receive time-tagged measurement data A from device A 100, and device B 200 also comprises a transmitter (not illustrated in Fig. 3d) to transmit time-tagged measurement data A and B to device C 300. Device C 300 comprises a receiver (not illustrated in Fig. 3d) to receive both time-tagged measurement data A and B from device B 200.

In yet another embodiment, as illustrated in Fig. 3e, time-tagged measurement data B from device B 200 may transit through device A 100 before reaching device C 300 on which estimator 330 is running. In this embodiment, device B 200 comprises a transmitter (not illustrated in Fig. 3e) to transmit time-tagged measurement data B to device A 100, device A 100 comprises a receiver (not illustrated in Fig. 3e) to receive time-tagged measurement data B from device B 200, and device A 100 also comprises a transmitter (not illustrated in Fig. 3e) to transmit both time-tagged measurement data A and B to device C 300, which comprises a receiver (not illustrated in Fig. 3e) to receive this data.

The transmission of time-tagged measurement data A and/or time-tagged measurement data B as illustrated in Figs. 3a to 3e may for example be carried out in the form of data packets, such as IP packets. Any other forms of wired or wireless transmission may be used, such as, and without being limited to, wireless transmissions based on Bluetooth, Wi-Fi, or Li-Fi. In one embodiment, the data is transmitted in real-time, i.e. as soon as available (in line with the above-mentioned definition of the term "real-time"). In one embodiment, the data is transmitted as a data stream in that messages containing said data are transmitted through the same communication medium or channel. The data may be encoded and/or encrypted prior to transmission.

Figs. 4a to 4d schematically illustrate devices A 100 in four embodiments of the invention, showing respectively that device A 100 may comprise (i) clock A 110, an IMU 120a (as motion sensor), and no estimator (see Fig. 4a); (ii) clock A 110, a distance measurement unit 120b (as motion sensor), and no estimator (see Fig. 4b); (iii) clock A 110, an IMU 120a (as motion sensor), and estimator 130 (see Fig. 4c); or (iv) clock A 110, a distance measurement unit 120b (as motion sensor), and estimator 130 (see Fig. 4d).

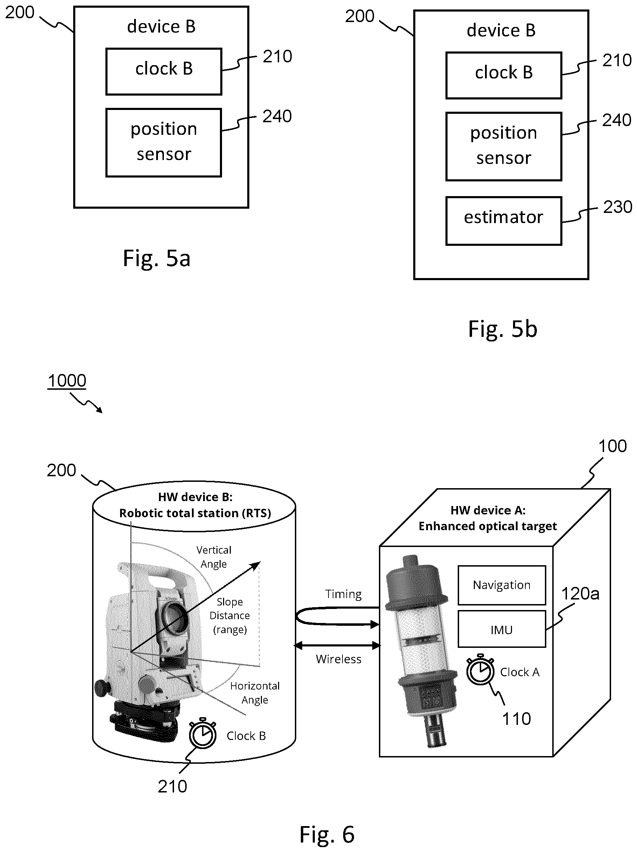

In one embodiment, device B 200 comprises a position sensor 240 to measure a motion of at least one point of device A 100 with respect to device B 200. Position sensor 240 may for example be at least one of: a stereo camera system, an optical instrument, a laser scanner, and a LIDAR. That is, position sensor 240 may produce more than a positioning measurement. Figs. 5a and 5b schematically illustrate device B 200 in two embodiments of the invention, showing respectively that device B 200 may comprise (i) clock B 210, position sensor 240, and no estimator (see Fig. 5a); and (ii) clock B 210, position sensor 240, and estimator 230 (see Fig. 5b).

In one embodiment, device A 100 comprises an IMU 120a, and device B 200 comprises a position sensor 240. For effective fusion of IMU and position sensor data, precise synchronization of clock A 110 and clock B 210 is desirable (i.e. resolving the offset between them). Specifically, to achieve a 1-mm precise positioning with a target point moving at 1 m/s, a synchronization accuracy of less than 1 ms is desirable.

In one embodiment, device A 100 comprises a target. The target allows to efficiently measure s20, by device B 200, a motion of one or more points ("target point(s)") of device A 100 with respect to device B 200. The target may for example be a prism or reflective target (for total stations), a fiducial marker (for cameras), a reference sphere (for laser scanners), or a checkerboard target, which can be measured by a suitable corresponding position sensor 240. During operation, an operator may subject the target to a motion (e.g., a waving motion pattern) for clock offset estimation and time synchronization.

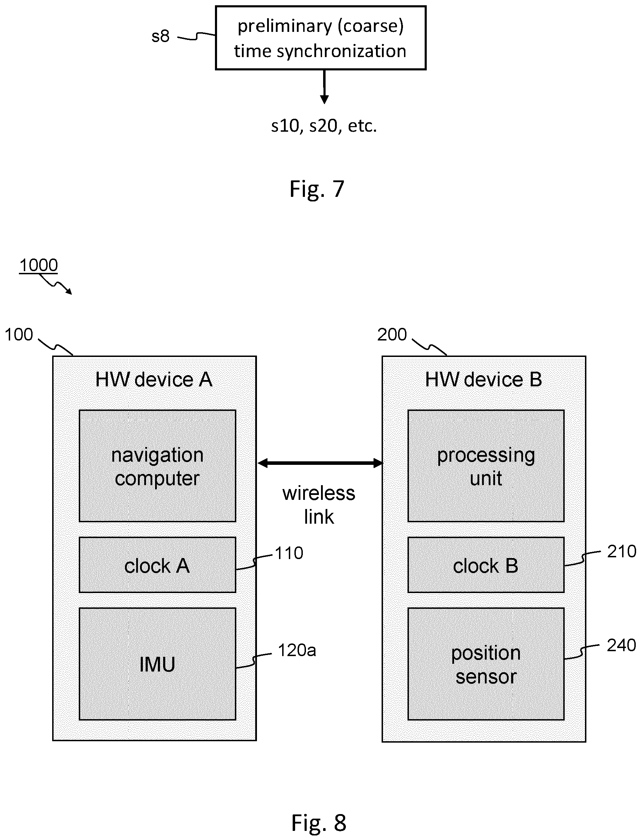

In one embodiment, device B 200 is or comprises a robotic total station (RTS) (some models of RTS are also called "universal total station" or UTS). In this embodiment, the RTS may automatically follow the target, i.e. a point on device A 100. The target may be an enhanced optical target. That is, as schematically illustrated in Fig. 6, device B 200 may track horizontal angle, vertical angle, and slope distance (range) of device A 100 when it is subject to motion. The term "slope distance" is used in the field of surveying to refer to slant range (i.e., distance along a line-of-sight, or true range, as opposed to the ground-projected range used in aeronautics). The RTS may measure the relative position of the optical target with high accuracy. The position data may then be transmitted, for example, from device B 200 to device A 100. Device A 100 may then estimate its own motion through measurements from an IMU and information received from device B 200. In doing so, device A 100 estimates s30 a time offset between clock A 110 and clock B 210 (which, optionally, may be a residual time offset compared to a prior, coarse estimate of the time offset; see the embodiment discussed below with reference to Fig. 7 in this respect), and may output s40 the estimated offset between clock A 110 and clock B 210 and/or an estimated orientation of the target (device A 100). The estimated orientation of the target may be part of the estimator motion states.

The "timing" arrow in Fig. 6 represents part of an optional preliminary coarse, i.e. rough, time synchronization operation, which is discussed below with reference to Fig. 7. This time synchronization operation for example occurs through a wireless link, as depicted in Fig. 6.

Fig. 7 is a flowchart of part of a method in one embodiment of the invention, wherein the method further comprises, prior to operations s10 and s20, a preliminary, i.e. coarse, time-synchronization s8 of clock A 110 and clock B 210. Furthermore, outputting s40a, s40c, by estimator 130, 230, 330, the estimated offset between clock A 110 and clock B 210, if applicable, comprises outputting an estimated residual offset. The preliminary time-synchronization s8 may be carried out for example by exchanging a timing signal using a unidirectional or bidirectional wireless communication link between device A 100 and device B 200. The coarse time synchronization is generally affected by systematic delays as well as unknown processing and transmission delays. By "coarse", it is here meant a precision smaller than 50 ms. A residual clock offset (clock B 210 vs clock A 110) is then estimated in an estimator (e.g. in estimator 130 of device A 100) from system motion information by modelling the offset's effect in position and delta-position measurement by device B (see for example sections B and B.1 below) (note: "delta-position measurement" is a synonym of "time-differenced position measurement"). The offset state estimate may be continuously fed back to device A 100 to correct time tags of incoming position measurements.

In one embodiment, the state variables that estimator 130, 230, 330 uses further comprise a state variable representing an estimated drift of the offset between clock A 110 and clock B 210. This is advantageous in that this may allow the method to be applied in a system with clocks that significantly drift with respect to each other over time; the filter model (i.e., estimator model) may then represent the reality more closely, resulting in more accurate estimates (of motion states and time-offset).

In one embodiment, (a) the at least one state variable representing the estimated offset between clock A 110 and clock B 210 or from which the estimated offset can be derived, and (b) the position-related state variable(s), are accompanied in estimator 130, 230, 330 by models of their respective uncertainty (e.g., initial and running).

In one embodiment, outputting, by estimator 130, 230, 330, at least one of: (i) the estimated offset between clock A 110 and clock B 210; and (ii) at least one estimated motion state of device A 100, is accompanied by outputting a corresponding, respective uncertainty measure (e.g., standard deviation).

Before discussing further embodiments of the invention, let us now further briefly explain, in section A below, the context in which some embodiments of the invention have been developed, for a better understanding thereof.

A. Context in which some embodiments of the invention have been developed

Some embodiments of the invention have been developed with the following two alternative solutions in mind.

First (as briefly mentioned in the above "Background" section), in GNSS-allowed applications, a GNSS receiver module placed on each of the devices of the distributed system can provide a common time base and thus synchronize both IMU and aiding-sensor data collection time-grids. The term "time-grid" here means the set of equally spaced time epochs on a specific time base (e.g. GPS time, or local clock A time, etc.) at which the measurements are collected. As it completely relies on GNSS coverage, this solution does not work reliably in GNSS-challenging environments (urban canyons, forests, etc.) and cannot be used at all in GNSS-denied scenarios (indoor, underground, etc.).

Second (as also briefly mentioned in the above "Background" section), inter-device wireless connectivity (e.g. radio) can also provide means for the time synchronization of the several hardware nodes in a system. However, depending on the communication technology used (which is typically selected according to bandwidth and range needs), the achievable time-synchronization accuracy may be insufficient for precise, millimeter accurate multi-sensor fusion. For example, for a 1-mm maximum error in the position tracking of a user point moving at 1 m/s, a synchronization error smaller than 1 ms is required.

In view of the considerations laid out in above section A, let us now describe further embodiments of the invention, together with considerations regarding how these embodiments may be implemented, for example, by software, hardware, or a combination of software and hardware.

B. Further embodiments

In some embodiments of the invention, a mechanism is provided for fine synchronization of a navigation-processor/IMU clock and a remote position-sensor clock in a distributed aided-INS (AINS) system through direct estimation of the time offset between the two clocks without use of GNSS timing.

In one embodiment, as schematically illustrated in Fig. 8, a navigation system 1000 comprises two physically separate hardware (HW) nodes: HW device A (ref. 100 in Fig. 8) and device B (ref. 200 in Fig. 8).

HW device A 100 contains a navigation computer, an IMU 120a and a clock 110 (clock A, also referred to as "C1"). Without loss of generality, the latter clock can be that of the navigation computer, that of IMU 120a, or another clock.

HW device B 200 contains a processing unit, a clock 210 (clock B, also referred to as "C2") and a position sensor 240 that is configured to measure the position of a specific point on HW device A 100, hereinafter called "target point", e.g., through a camera or other optical instrument.

HW device B 200 sends the position measurements, time-tagged using clock B 210, to HW device A 100 via, e.g., a wireless communication link (e.g. radio).

The wireless communication link is unidirectional or bidirectional and may also provide means for coarse clock synchronization (down to an accuracy of 50 ms).

In this architecture, and after coarse synchronization done through e.g. the wireless connection, the position sensor measurement time-grid (set by clock B 210) will still show residual offset and drift with respect to the time-grid set by clock A 110 (on which the navigation processes and the IMU measurement collection run). This can be expressed as:

$$t_{C2} = \alpha_{C2/C1}\, t_{C1} + \delta t_{C2/C1} \qquad\qquad (1)$$

where:

$t_{C2}$     is the time in clock B ("C2");

$t_{C1}$     is the simultaneous time in clock A ("C1");

$\delta t_{C2/C1}$     is the residual offset of clock B ("C2") with respect to clock A ("C1"); and

$\alpha_{C2/C1}$     is the residual scale-factor of clock B ("C2") with respect to clock A ("C1 ").

The navigation computer in HW device A 100 may run an aided-INS (AINS) state estimator that is updated on a fixed time-grid (set by clock A, also referred to as "C1") with position and delta-position measurements (constructed from consecutive position samples) from HW device B 200. To allow for this, a measurement data preparation module (running on the navigation computer) may buffer the incoming HW device B measurements and interpolates them to the aided-INS state estimator update time-grid. Given the latencies in the distributed setup, the estimator is designed to handle delayed updates (up to a maximum latency, e.g., 200 ms).

B.1. Clock offset estimation

The measurement data preparation just described assumes that the time-tags of the position measurements from HW device B 200 express epochs in the timeline of clock A ("C1") instead of clock B ("C2"). Because the AINS state estimator uses IMU data collected in a time-grid of clock A ("C1") to propagate the dynamics states and obtain a *priori* estimates of the measurement updates, this assumption causes an error in the measurement model proportional to the offset between clock B ("C2") and clock A ("C1"), $\delta t_{C2/C1}$. To model this effect, it is assumed that the drift between clocks is small (i.e., $\alpha_{C2/C1} \approx 1$) and that its residual effect can be captured by continuously estimating the offset $\delta t_{C2/C1}$. The target point position measurement by the sensor in HW device B 240 can then be given as:

$$\tilde{r}_{C2,k} = \tilde{r}(t_{C2,k}) = r(t_{C1,k} + \delta t_{C2/C1,k}) + w_k \tag{2}$$

where r(t) is the target point position at time $t$ and $w_k$ represents the effect of sensor measurement white noise. Linearizing the position term r(t) around $t_{C1,k}$ gives:

$$\tilde{r}_{C2,k} = r_{C1,k} + \delta t_{C2/C1,k} v_{C1,k} + w_k \tag{3}$$

where $r_{C1,k}$ and $v_{C1,k}$ are the position and velocity of target point at time $t_{C1,k}$, respectively. These can be mapped to the position and velocity states of the estimator (applying lever-arm translation and reference frame rotation if needed).

Similarly, a delta-position measurement can be modeled as:

$$\widetilde{\Delta r}_{C2,k|k-1} = \tilde{r}(t_{C2,k}) - \tilde{r}(t_{C2,k-1}) = r_{C1,k} + \delta t_{C2/C1,k} v_{C1,k} - r_{C2,k-1} + w_k - w_{k-1}$$

$$\tag{4}$$

The previous target point position term $r_{C2,k-1}$ can be modeled as a constant estimator state, being reset after each measurement update (just before each estimator's time update) to:

$$r_{C2,k-1} \leftarrow r^+_{C1,k} + \delta t^+_{C2/C1,k} v^+_{C1,k} \tag{5}$$

where the superscript "+" denotes a posteriori state estimate. The full estimator covariance matrix is updated accordingly as:

$$\begin{bmatrix} P_x & P_{xr,C2,k-1} \\ P^T_{xr,C2,k-1} & P_{r,C2,k-1} \end{bmatrix} \leftarrow \begin{bmatrix} I & 0 \\ H_{r,C2,k-1} & 0 \end{bmatrix} \begin{bmatrix} P_x & P_{xr,C2,k-1} \\ P^T_{xr,C2,k-1} & P_{r,C2,k-1} \end{bmatrix}^+ \begin{bmatrix} I & H^T_{r,C2,k-1} \\ 0 & 0 \end{bmatrix} + \begin{bmatrix} 0 & 0 \\ 0 & q_{r,0}I \end{bmatrix}$$

$$\leftarrow \begin{bmatrix} P_x & P_x H^T_{r,C2,k-1} \\ H_{r,C2,k-1}P_x & H_{r,C2,k-1}P_x H^T_{r,C2,k-1} + q_{r,0}I \end{bmatrix}^+ \tag{6}$$

where $H_{r,C2,k-1}$ is the Jacobian matrix of the assignment (5) with respect to the other estimator states $x$ (beyond $r_{C2,k-1}$). The scalar $q_{r,0}$ is a small initial variance added to $P_{r,C2,k-1}$ to ensure that the full covariance matrix remains positive definite.

Note that, if sensor measurement error effects are to be modeled as estimator states (e.g. bias, colored noise, etc.), their contributions can also be added to the past-state $r_{C2,k-1}$ upon its reset in equation (5).

B.2. Clock offset observability

As mentioned above, the fact that the AINS estimator runs on a clock A's time-grid gives rise to a clock-offset dependent term in the HW device B position and delta-position measurement update models (see equations (3) and (4)), making this synchronization error potentially observable. One further condition should be met for it to be observable: The motion level of the target point on device A relative to device B should be higher than the noise level on the position and delta-position measurements.

B.3. Feedback of clock offset estimate to measurement processor

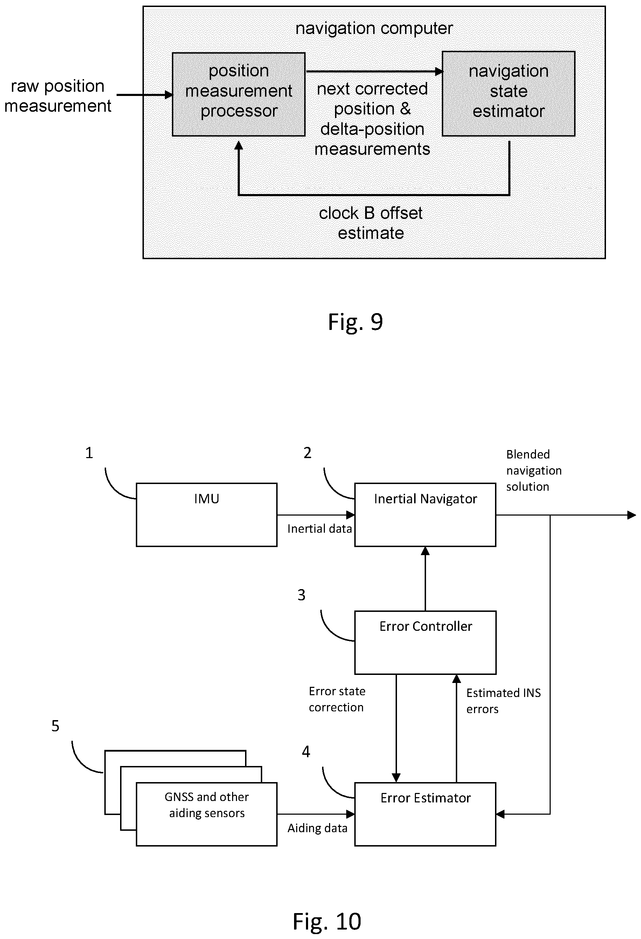

The above-described clock offset estimation process effectively extrapolates the position measurement $\tilde{r}_{C2,k}$ from time $t_{C2,k}$ to $t_{C1,k}$ using the estimate $\delta t_{C2/C1,k}$. If the magnitude of this offset exceeds half of the position sensor's sampling time, then choosing a different measurement sample for the update would result in lower extrapolation error. To accomplish this, in one embodiment of the invention, the clock offset state can be fed back to the position measurement processor, as schematically depicted in Fig. 9. There, the offset state corrections from the estimator can be accumulated and used to adjust the time tags of the measurements in the buffer (so that all measurements have the same time-tag correction), effectively converting them from (estimated) clock B ("C2") to clock A ("C1"). This relies on the assumption that the drift between the two clocks is negligible with respect to the time span of the set of measurements in the buffer at any given time (i.e. difference between the time of the latest sample vs the time of the oldest sample held). To maintain consistency, each time the clock offset state value is fed back to the measurement processor, its value (within the estimator) is reset to zero.

C. Inertial navigation system (INS) and aided INS

Reference has been made above to an aided inertial navigation system (INS). For completeness, the concepts of INS and aided INS are described in sections C.1 and C.2 respectively.

C.1 Inertial navigation system (INS)

An INS is a navigation instrument that computes its navigation solution by propagating Newton's equations of motion using as inputs measured specific forces or incremental velocities from a triad of accelerometers and measured angular rates or incremental angles from a triad of gyros. A terrestrial INS is designed to navigate on the earth where it is subjected to gravity and earth rate. A celestial INS is designed to navigate in space where it is subjected to smaller gravitational forces from multiple celestial bodies. The present disclosure is concerned with a terrestrial INS. The qualifier "terrestrial" is hereafter implied but not cited explicitly.

An INS can navigate with a specified accuracy after an initialization of the inertial navigator mechanization during which it determines its initial position, initial velocity and North and down directions to a specified accuracy that is commensurate with its inertial sensor errors. The term "alignment" is used to describe this initialization and any ongoing corrections of the inertial navigator mechanization. A free-inertial INS performs an initial alignment and then propagates its navigation solution with no further corrections. See ref. [3] for an overview of an INS. See refs. [4], [6], [7] for descriptions of inertial navigator equations and algorithms.

C.2 Aided INS

An aided INS (AINS) undergoes ongoing corrections to its inertial navigator mechanization to constrain the growth in inertial navigation errors. The AINS uses an error estimator to estimate INS errors and some means of INS error control to correct the INS errors. A so-called "closed-loop AINS" uses the estimated INS errors from the error estimator to correct the inertial navigator mechanization integrators. This causes the INS alignment to be continuously corrected, and as such is a method for achieving mobile alignment.

Fig. 10, which is a copy of Fig. 5 of ref. [2], shows a generic closed-loop AINS architecture. The inertial measurement unit (IMU) 1 generates incremental velocities and incremental angles at the IMU sampling rate, typically 50 to 500 samples per second. The corresponding IMU sampling time interval is the inverse of the IMU sampling rate, typically 1/50 to 1/1000 seconds. The incremental velocities are the specific forces from the IMU accelerometers integrated over the IMU sampling time interval. The incremental angles are the angular rates from the IMU gyros integrated over the IMU sampling time interval. See ref. [4] for information on inertial sensors and IMU mechanizations. The inertial navigator 2 receives the inertial data from the IMU and computes the current IMU position (typically latitude, longitude, altitude), velocity (typically North, East and Down components) and orientation (roll, pitch and heading) at the IMU sampling rate.

The aiding sensors 5 are any sensors that provide navigation information that is statistically independent of the inertial navigation solution that the INS generates. A GNSS receiver is a widely used aiding sensor.

The error estimator 4 is one of several possible estimation algorithms that compute an estimate of a state vector based on constructed measurements. The error estimator is typically a Kalman filter (see ref. [5]), however it can be one of several other types of multivariable estimators that include an unscented Kalman filter (see refs. [8], [9]), a particle filter (see ref. [10]), or an M-estimator (of which a least-squares adjustment is a special case; see ref. [11] as an example). The measurements typically comprise computed differences between the inertial navigation solution elements and corresponding data elements from the aiding sensors. For example, an inertial-GNSS position measurement comprises the differences in the latitudes, longitudes and altitudes respectively computed by the inertial navigator and a GNSS receiver. The true positions cancel in the differences, so that the differences in the position errors remain. An error estimator designed for integration of an INS and aiding sensors typically estimates the errors in the INS and aiding sensors. The INS errors typically comprise the following:

- Inertial North, East and Down position errors
- Inertial North, East and Down velocity errors
- Inertial platform misalignment errors
- Accelerometer biases
- Gyro biases

GNSS errors may include the following:

- North, East, and Down position errors
- Receiver clock offset and drift
- Carrier phase ambiguities
- Atmospheric range errors
- Multipath errors
- Antenna phase center (APC) errors

Ref. [5] provides a relatively comprehensive treatment of Kalman filtering. It also contains the aided INS as an example application. Ref. [6] provides a detailed analysis of different INS error models that may be used in an AINS Kalman filter.

The error controller 3 computes a vector of resets from the INS error estimates generated by the error estimator and applies these to the inertial navigator integration processes, thereby regulating the inertial navigator errors in a closed-loop error control loop. This causes the inertial navigator errors to be continuously regulated and hence maintained at significantly smaller magnitudes that an uncontrolled or free-inertial navigator would be capable of.

The technology of aided inertial navigation originated in the late 1960s and found application within military navigation systems. Since then, much research has been conducted and much literature has been generated on the subject. An example of a book on the subject is ref. [3]. The equivalent of Fig. 10 is shown in Figure 6-2 in ref. [3], p. 273. See also ref. [6] for a relatively comprehensive treatment of the mathematics of aided INS.

Device hosting the estimator

Fig. 10 schematically illustrates a device 500 in one embodiment of the invention. Device 500 is configured for estimating an offset between a first clock 110 (clock A) and a second clock 210 (clock B). As mentioned above, clock A 110 runs on a first device 100 (device A), clock B 210 runs on a second device 200 (device B), and device A 100 and device B 200 are moving, at least for a period of time, with respect to each other. Furthermore, device A 100 comprises a motion sensor 120.

Device 500 comprises a first obtaining unit 510, a second obtaining unit 520, and an estimator-operating unit 530.

First obtaining unit 510 is configured for obtaining (e.g., receiving) data indicative of a motion of device A 100 measured using motion sensor 120 of device A 100, wherein the data is here referred to as "measurement data A", and measurement data A is time-tagged using clock A 110.

Second obtaining unit 520 is configured for obtaining (e.g., receiving) data indicative of a motion of the at least one point of device A 100 with respect to device B 200 as measured by device B 200, wherein the data is here referred to as "measurement data B", and measurement data B is time-tagged using clock B 210.

Estimator-operating unit 530 is configured for operating an estimation process, hereinafter referred to as "estimator" 130, 230, 330, wherein estimator 130, 230, 330 uses state variables comprising: (i) at least one state variable representing an estimated offset between clock A 110 and clock B 210 or from which the estimated offset can be derived, and (ii) at least one position-related state variable; and (b) the estimator 130, 230, 330 computes values of its state variables based on: (i) the time-tagged measurement data A, and (ii) the time-tagged measurement data B. Estimator-operating unit 530 is also configured so that estimator 130, 230, 330 outputs: (a) the estimated offset between clock A 110 and clock B 210; and/or (b) at least one estimated motion state of device A 100.

Device 500 may be one of device A 100, device B 200, and device C 300.

Additional remarks

Any of the above-described methods and their embodiments may be implemented, at least partially, by means of a computer program or a set of computer programs. The computer program(s) may be loaded on an apparatus or device, such as for example a survey pole, a robotic total station (RTS), or a server (which may comprise one or a plurality of computers). Therefore, some embodiments of the invention also relate to a computer program or set of computer programs, which, when carried out on a device as described above, such as for example a survey pole, an RTS, or a server, causes the device to carry out any one of the above-described methods and their embodiments.

The invention also relates, in some embodiments, to a computer-readable medium or a computer-program product including the above-mentioned computer program. The computer-readable medium or computer-program product may for instance be a magnetic tape, an optical memory disk, a magnetic disk, a magnetooptical disk, an SSD, a CD-ROM, a DVD, a CD, a flash memory unit, or the like, wherein the computer program is permanently or temporarily stored. In some embodiments, a computer-readable medium (or to a computer-program product) has computer-executable instructions for carrying out any one of the methods of the invention.

In one embodiment, a computer program as claimed may be delivered to the field as a computer program product, for example through a firmware or software update to be installed on devices already in the field. This applies to each of the above-described methods and devices.

A device, such as for example a survey pole or a robotic total station (RTS), may further comprise processor units, one or a plurality of accurate clocks (such as crystal oscillators), one or a plurality of central processing units (CPU), one or a plurality of memory units (RAM, ROM, flash memory, or the like), and a display for displaying information to a user.

Where the terms "first obtaining unit", "second obtaining unit", "estimator-operating unit", and the like are used herein as units (or sub-units) of an apparatus, no restriction is made regarding how distributed the constituent parts of a unit (or sub-unit) may be. That is, the constituent parts of a unit (or sub-unit) may be distributed in different software or hardware components or devices for bringing about the intended function. Further, the units may be gathered together for performing their functions by means of a combined, single unit (or sub-unit).

The above-mentioned units and sub-units may be implemented using hardware, software, a combination of hardware and software, pre-programmed ASICs (application-specific integrated circuit), machine-readable instructions, etc. A unit may include a central processing unit (CPU), a storage unit, input/output (I/O) units, network connection devices, etc.

Although the present invention has been described on the basis of detailed examples, the detailed examples only serve to provide the skilled person with a better understanding and are not intended to limit the scope of the invention. The scope of the invention is defined by the appended claims.

Abbreviations:

| | |
|---|---|
| AINS | aided inertial navigation system |
| BDS | BeiDou Navigation Satellite System |
| CD | compact disc |
| CD-ROM | compact disk read-only memory |
| CPU | central processing unit |
| DMI | distance measuring instrument |
| DVD | digital versatile disc |
| GNSS | global navigation satellite system |
| GPS | Global Positioning System |
| HW | hardware |
| I/O | input/output |
| IMU | inertial measurement unit |
| INS | inertial navigation system |
| IP | Internet Protocol |

| LEO-PNT | Low Earth Orbit-Positioning, Navigation and Timing |
| MEO-PNT | Medium Earth Orbit-Positioning, Navigation, and Timing |
| NAVIC | NAVigation with Indian Constellation |
| NSS | navigation satellite system |
| QZSS | Quasi-Zenith Satellite System |
| RAM | random-access memory |
| ref. | reference |
| refs. | references |
| RNSS | regional navigation satellite system |
| ROM | read-only memory |
| RTS | robotic total station |
| SSD | solid-state disk |
| UTS | universal total station |

References:

[1] Hofmann-Wellenhof, B., et al., "GNSS, Global Navigation Satellite Systems, GPS, GLONASS, Galileo, & more", Springer-Verlag Wien, 2008.

[2] EP 3 293 549 A1 titled "Advanced navigation satellite system positioning method and system using delayed precise information" (Trimble ref.: 16029-EPO).

[3] George Siouris, "Aerospace Avionics Systems, A Modern Synthesis", Academic Press 1993.

[4] A. Lawrence, "Modern Inertial Technology, Navigation Guidance and Control", Second Edition, Springer 1998.

[5] R.G. Brown and P.Y.C. Hwang, "Introduction to Random Signals and Applied Kalman Filtering", 3rd Edition, John Wiley & Sons 1997.

[6] R.M. Rogers, "Applied Mathematics in Integrated Navigation Systems", AIAA Education Series 2000.

[7] P.G. Savage, "Strapdown Analytics, Parts 1 and 2", Strapdown Associates, 2000

[8] S. J. Julier and J. K. Uhlmann, "A New Extension of the Kalman Filter to Nonlinear Systems". Proceedings of AeroSense: The 11th Int. Symp. On Aerospace/Defence Sensing, Simulation and Controls, 1997.

[9] Wan, E.A.; Van Der Merwe, R., "The unscented Kalman filter for nonlinear estimation", Proceedings of the IEEE 2000 Adaptive Systems for Signal Processing, Communications, and Control Symposium.

[10] Arulampalam, M.S., Maskell, S., Gordon, N. & Clapp, T. (2002), "A tutorial on particle filters for online nonlinear/non-gaussian Bayesian tracking". IEEE Transactions on Signal Processing. 50(2):174-188.

[11] Huber, Peter J. (2009). "Robust Statistics (2nd ed.)". Hoboken, NJ: John Wiley & Sons Inc.

**Claims**

1.  Method, carried out by a system (1000) comprising a first device (100), hereinafter referred to as "device A", and a second device (200), hereinafter referred to as "device B", wherein

    device A (100) and device B (200) are moving, at least for a period of time, with respect to each other;
    a first clock (110), hereinafter referred to as "clock A", runs on device A (100);
    a second clock (210), hereinafter referred to as "clock B", runs on device B (200); and
    device A (100) comprises a motion sensor (120);

    the method comprising:

    measuring (s10), using the motion sensor (120) of device A (100), a motion of device A (100), wherein data indicative of the motion of device A (100) measured using the motion sensor (120) of device A (100) is hereinafter referred to as "measurement data A", and measurement data A is time-tagged using clock A (110);
    measuring (s20), by device B (200), a motion of at least one point of device A (100) with respect to device B (200), wherein data indicative of the motion of the at least one point of device A (100) with respect to device B (200) as measured by device B (200) is hereinafter referred to as "measurement data B", and measurement data B is time-tagged using clock B (210);
    operating (s30) an estimation process, hereinafter referred to as "estimator" (130, 230, 330), wherein

the estimator (130, 230, 330) uses state variables comprising:

at least one state variable representing an estimated offset between clock A (110) and clock B (210) or from which the estimated offset can be derived, and
at least one position-related state variable; and

the estimator (130, 230, 330) computes values of its state variables based on:

the time-tagged measurement data A, and
the time-tagged measurement data B; and

outputting (s40a, s40b, s40c), by the estimator (130, 230, 330), at least one of:

the estimated offset between clock A (110) and clock B (210); and
at least one estimated motion state of device A (100).

2. Method of claim 1, wherein device A (100) comprises a target.

3. Method of claim 1 or 2, wherein device B (200) is or comprises a robotic total station.

4. Method according to any one of the preceding claims, wherein the motion sensor (120) of device A (100) is, or comprises, at least one of: an inertial measurement unit (120a) and a distance measurement unit (120b).

5. Method according to any one of the preceding claims, wherein device B (200) comprises a position sensor (240), which, preferably, is at least one of: a stereo camera system, an optical instrument, a laser scanner, and a LIDAR.

6. Method according to any one of the preceding claims, further comprising transmitting, from device B (200) to device A (100), the time-tagged measurement data B.

7. Method according to any one of claims 1 to 5, further comprising transmitting, from device A (100) to device B (200), the time-tagged measurement data A.

8. Method according to any one of claims 1 to 5, wherein

the system (1000) further comprises a third device (300), hereinafter referred to as "device C";
the method further comprises:

transmitting, from device A (100) to device C (300), the time-tagged measurement data A; and
transmitting, from device B (200) to device C (300), the time-tagged measurement data B; and

operating the estimator (330) is carried out on device C (300).

9. Method according to any one of the preceding claims, wherein the estimator (130, 230, 330) is or comprises at least one of: a Kalman filter, an unscented Kalman filter, a robust estimator, and a particle filter.

10. Method according to any one of the preceding claims, further comprising, before the measuring operations, a preliminary time-synchronization (s8) of clock A (110) and clock B (210), wherein outputting (s40a, s40c), by the estimator (130, 230, 330), the estimated offset between clock A (110) and clock B (210), if applicable, comprises outputting an estimated residual offset.

11. Method of claim 10, wherein the preliminary time-synchronization (s8) is carried out using a wireless communication link between device A (100) and device B (200).

12. Method according to any one of the preceding claims, wherein the state variables that the estimator (130, 230, 330) uses further comprise a state variable representing an estimated drift of the offset between clock A (110) and clock B (210).

13. Method according to any one of the preceding claims, wherein

the at least one state variable representing the estimated offset between clock A (110) and clock B (210) or from which the estimated offset can be derived, and

the at least one position-related state variable,

are accompanied in the estimator (130, 230, 330) by models of their respective uncertainty.

14. Method according to any one of the preceding claims, wherein outputting, by the estimator (130, 230, 330), at least one of:

the estimated offset between clock A (110) and clock B (210); and

at least one estimated motion state of device A (100),

is accompanied by outputting a corresponding, respective uncertainty measure.

15. Method, carried out by a device or a set of devices, for estimating an offset between a first clock (110), hereinafter referred to as "clock A", and a second clock (210), hereinafter referred to as "clock B", wherein

clock A (110) runs on a first device (100), hereinafter referred to as "device A";

clock B (210) runs on a second device (200), hereinafter referred to as "device B";

device A (100) and device B (200) are moving, at least for a period of time, with respect to each other; and

device A (100) comprises a motion sensor (120);

the method comprising:

obtaining data indicative of a motion of device A (100) measured (s10) using the motion sensor (120) of device A (100), wherein the data is hereinafter referred to as "measurement data A", and measurement data A is time-tagged using clock A (110);

obtaining data indicative of a motion of the at least one point of device A (100) with respect to device B (200) as measured (s20) by device B (200), wherein the data is hereinafter referred to as "measurement data B", and measurement data B is time-tagged using clock B (210);

operating (s30) an estimation process, hereinafter referred to as "estimator" (130, 230, 330), wherein

the estimator (130, 230, 330) uses state variables comprising:

at least one state variable representing an estimated offset between clock A (110) and clock B (210) or from which the estimated offset can be derived, and

at least one position-related state variable; and

the estimator (130, 230, 330) computes values of its state variables based on:

the time-tagged measurement data A, and

the time-tagged measurement data B; and

outputting (s40a, s40b, s40c), by the estimator (130, 230, 330), at least one of:

the estimated offset between clock A (110) and clock B (210); and

at least one estimated motion state of device A (100).

16. Method of claim 15, wherein the device or a set of devices carrying out the method is one of: device A (100), device B (200), and a third device (300).

17. Device or set of devices for estimating an offset between a first clock (110), hereinafter referred to as "clock A", and a second clock (210), hereinafter referred to as "clock B", wherein

clock A (110) is configured for running on a first device (100), hereinafter referred to as "device A";

clock B (210) is configured for running on a second device (200), hereinafter referred to as "device B";

device A (100) and device B (200) are configured for moving, at least for a period of time, with respect to each other; and

device A (100) comprises a motion sensor (120);

the device, or the set of devices, being configured for:

obtaining data indicative of a motion of device A (100) measured using the motion sensor (120) of device A (100), wherein the data is hereinafter referred to as "measurement data A", and measurement data A is time-tagged using clock A (110);
obtaining data indicative of a motion of the at least one point of device A (100) with respect to device B (200) as measured by device B (200), wherein the data is hereinafter referred to as "measurement data B", and measurement data B is time-tagged using clock B (210);
operating an estimation process, hereinafter referred to as "estimator" (130, 230, 330), wherein

the estimator (130, 230, 330) uses state variables comprising:

at least one state variable representing an estimated offset between clock A (110) and clock B (210) or from which the estimated offset can be derived, and
at least one position-related state variable; and

the estimator (130, 230, 330) computes values of its state variables based on:

the time-tagged measurement data A, and
the time-tagged measurement data B; and outputting, by the estimator (130, 230, 330), at least one of:

the estimated offset between clock A (110) and clock B (210); and
at least one estimated motion state of device A (100).

18. Computer program or set of computer programs comprising computer-readable instructions configured, when executed on a computer or set of computers, to cause the computer or set of computers to carry out the method according to any one of claims 1 to 16.

19. Computer program product or storage mediums comprising a computer program or set of computer programs according to claim 18.

s10 — measuring, using the motion sensor of device A, a motion of device A, wherein data indicative of the motion of device A measured using the motion sensor of device A is referred to as "measurement data A", and measurement data A is time-tagged using clock A

s20 — measuring, by device B, a motion of at least one point of device A with respect to device B, wherein data indicative of the motion of the at least one point of device A with respect to device B as measured by device B is referred to as "measurement data B", and measurement data B is time-tagged using clock B

s30 — operating an estimator using state variables comprising: (i) at least one state variable representing an estimated offset between clock A and clock B or from which the estimated offset can be derived, and (ii) at least one position-related state variable; and the estimator computing values of its state variables based on: the time-tagged measurement data A, and the time-tagged measurement data B

s40a — outputting, by the estimator, the estimated offset between clocks A and B

Fig. 1a

s10 — measuring, using the motion sensor of device A, a motion of device A, wherein data indicative of the motion of device A measured using the motion sensor of device A is referred to as "measurement data A", and measurement data A is time-tagged using clock A

s20 — measuring, by device B, a motion of at least one point of device A with respect to device B, wherein data indicative of the motion of the at least one point of device A with respect to device B as measured by device B is referred to as "measurement data B", and measurement data B is time-tagged using clock B

s30 — operating an estimator using state variables comprising: (i) at least one state variable representing an estimated offset between clock A and clock B or from which the estimated offset can be derived, and (ii) at least one position-related state variable; and the estimator computing values of its state variables based on: the time-tagged measurement data A, and the time-tagged measurement data B

s40b — outputting, by the estimator, at least one estimated motion state of device A

Fig. 1b

s10 — measuring, using the motion sensor of device A, a motion of device A, wherein data indicative of the motion of device A measured using the motion sensor of device A is referred to as "measurement data A", and measurement data A is time-tagged using clock A

s20 — measuring, by device B, a motion of at least one point of device A with respect to device B, wherein data indicative of the motion of the at least one point of device A with respect to device B as measured by device B is referred to as "measurement data B", and measurement data B is time-tagged using clock B

s30 — operating an estimator using state variables comprising: (i) at least one state variable representing an estimated offset between clock A and clock B or from which the estimated offset can be derived, and (ii) at least one position-related state variable; and the estimator computing values of its state variables based on: the time-tagged measurement data A, and the time-tagged measurement data B

s40c — outputting, by the estimator, (a) the estimated offset between clocks A and B, and (b) at least one estimated motion state of device A

Fig. 1c

1000

100 — device A

clock A —110

motion
sensor —120

200 — device B

clock B —210

## Fig. 2

1000

100 — device A

clock A —110

motion
sensor —120

estimator —130

200 — device B

clock B —210

## Fig. 3a

Fig. 3b

Fig. 3c

1000

100

**device A**

clock A — 110

motion sensor — 120

200

**device B**

clock B — 210

300

**device C**

estimator — 330

Fig. 3d

1000

100

**device A**

clock A — 110

motion sensor — 120

200

**device B**

clock B — 210

300

**device C**

estimator — 330

Fig. 3e

Fig. 4a

Fig. 4b

Fig. 4c

Fig. 4d

Fig. 5a

Fig. 5b

Fig. 6

s8 ⟶ [ preliminary (coarse) time synchronization ]

⟶ s10, s20, etc.

Fig. 7

1000

100

**HW device A**

navigation computer

clock A — 110

IMU — 120a

⟷ wireless link

200

**HW device B**

processing unit

clock B — 210

position sensor — 240

Fig. 8

Fig. 9

Fig. 10

500

device

510 — first obtaining unit for obtaining time-tagged measurement data A

520 — second obtaining unit for obtaining time-tagged measurement data B

530 — estimator-operating unit

Fig. 11

Europäisches
Patentamt
European
Patent Office
Office européen
des brevets

# EUROPEAN SEARCH REPORT

**Application Number**

EP 24 22 0484

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2014/350886 A1 (METZLER BERNHARD [AT]) 27 November 2014 (2014-11-27) * figures 3a, 4 * * paragraph [0031] - paragraph [0055] * * paragraph [0114] - paragraph [0126] * ----- | 1-19 | INV. G01S5/02 G01S11/02 ADD. G01C15/00 |
| A | LIU WANLI ET AL: "Time Delay Error Online Correction of LiDAR-IMU System Through MSCKF Integrated DLRNN Method", IEEE/ASME TRANSACTIONS ON MECHATRONICS, IEEE SERVICE CENTER, PISCATAWAY, NJ, US, vol. 29, no. 3, 1 June 2024 (2024-06-01), pages 1878-1890, XP011973337, ISSN: 1083-4435, DOI: 10.1109/TMECH.2023.3317018 [retrieved on 2023-10-11] * Equations 4 and 5 * * figures 1, 2 * * Section II.B * ----- | 1,15, 17-19 | |
| A | US 11 543 783 B2 (QUALCOMM INC [US]) 3 January 2023 (2023-01-03) * column 1 - column 2 * ----- | 10-12 | TECHNICAL FIELDS SEARCHED (IPC) G01S G01C |
| A | CN 107 343 314 B (SHENYANG INST AUTOMATION CAS) 4 February 2020 (2020-02-04) * the whole document * ----- | 10-12 | |

The present search report has been drawn up for all claims

| Place of search | Date of completion of the search | Examiner |
|---|---|---|
| Munich | 23 May 2025 | Bomart, Sébastien |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 4 764 586 A1**

## ANNEX TO THE EUROPEAN SEARCH REPORT
## ON EUROPEAN PATENT APPLICATION NO.

EP 24 22 0484

23-05-2025

| Patent document cited in search report | | | Publication date | Patent family member(s) | | | Publication date |
|---|---|---|---|---|---|---|---|
| US 2014350886 | A1 | | 27-11-2014 | CN | 103782132 | A | 07-05-2014 |
| | | | | EP | 2570769 | A1 | 20-03-2013 |
| | | | | EP | 2756262 | A1 | 23-07-2014 |
| | | | | KR | 20140042920 | A | 07-04-2014 |
| | | | | US | 2014350886 | A1 | 27-11-2014 |
| | | | | WO | 2013037848 | A1 | 21-03-2013 |
| US 11543783 | B2 | | 03-01-2023 | CN | 112714876 | A | 27-04-2021 |
| | | | | EP | 3857251 | A1 | 04-08-2021 |
| | | | | US | 2020096949 | A1 | 26-03-2020 |
| | | | | WO | 2020068785 | A1 | 02-04-2020 |
| CN 107343314 | B | | 04-02-2020 | NONE | | | |

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 3293549 A1

**Non-patent literature cited in the description**

- **HOFMANN-WELLENHOF, B. et al.** GNSS, Global Navigation Satellite Systems, GPS, GLONASS, Galileo, & more. Springer-Verlag Wien, 2008
- **GEORGE SIOURIS**. Aerospace Avionics Systems, A Modern Synthesis. Academic Press, 1993
- **A. LAWRENCE**. Modern Inertial Technology, Navigation Guidance and Control. Springer, 1998
- **R.G. BROWN** ; **P.Y.C. HWANG**. Introduction to Random Signals and Applied Kalman Filtering. John Wiley & Sons, 1997
- **R.M. ROGERS**. Applied Mathematics in Integrated Navigation Systems. AIAA Education Series, 2000
- **P.G. SAVAGE**. Strapdown Analytics, Parts 1 and 2. Strapdown Associates, 2000
- **S. J. JULIER** ; **J. K. UHLMANN**. New Extension of the Kalman Filter to Nonlinear Systems. *Proceedings of AeroSense: The 11th Int. Symp. On Aerospace/Defence Sensing, Simulation and Controls*, 1997
- **WAN, E.A** ; **VAN DER MERWE, R**. The unscented Kalman filter for nonlinear estimation. *Proceedings of the IEEE 2000 Adaptive Systems for Signal Processing, Communications, and Control Symposium*
- **ARULAMPALAM, M.S** ; **MASKELL, S** ; **GORDON, N** ; **CLAPP, T.** A tutorial on particle filters for online nonlinear/non-gaussian Bayesian tracking. *IEEE Transactions on Signal Processing*, 2002, vol. 50 (2), 174-188
- **HUBER, PETER J**. Robust Statistics. Hoboken, NJ: John Wiley & Sons Inc, 2009